# DEMANDE DE BREVET EUROPEEN

(11) **EP 4 574 884 A1**
(43) Date de publication de la demande: **25.06.2025**
(21) Numéro de dépôt: 24220086.3
(22) Date de dépôt: 16.12.2024
(51) Int. Cl.: C08G 65/336, C08L 71/00

(54) **COMPOSITION COMPRENANT AU MOINS UN POLYMÈRE SILYLÉ**

(30) Priorité: 21.12.2023 FR 2314739
(71) Demandeur: Bostik SA, 92800 Puteaux (FR); Centre National de la Recherche Scientifique, 75016 Paris (FR); UNIVERSITE DE BORDEAUX, 33000 Bordeaux (FR); INSTITUT POLYTECHNIQUE DE BORDEAUX, 33400 Talence (FR)
(72) Inventeur: SIMON, Frédéric, 60280 Venette (FR); PUCHEAULT, Mathieu, 33405 Talence Cedex (FR); CHABAUD, Laurent, 33405 Talence Cedex (FR); BOYET, Marion, 33405 Talemce Cedex (FR)
(74) Mandataire: Arkema Patent

(57) **Abrégé**

La présente invention concerne une composition comprenant :
- au moins un polymère silylé, et
- au moins un catalyseur boré protégé de formule (I) B(Rⁱ)(Rⁱⁱ)(ORⁱⁱⁱ) ou de formule (II) B(Rⁱ)(OR^{iv})(OR^{v}).

La présente invention concerne également l'utilisation de la composition selon l'invention.

La présente invention vise aussi un procédé de photoactivation de la composition selon l'invention.

De plus, la présente invention vise un procédé d'assemblage de substrats.

Enfin, la présente invention concerne un article.

## Description

### Domaine de l'invention

La présente invention concerne une composition comprenant au moins un polymère silylé et son utilisation, un procédé de photoactivation, un procédé d'assemblage de substrats et un article.

### Arrière-plan technique

Les polymères silylés sont typiquement utilisés à titre d'adhésifs, de mastics, de revêtements, par exemple dans l'industrie aéronautique, l'automobile ou la construction. De tels polymères comprennent généralement des groupes terminaux de type alkoxysilane reliés, directement ou indirectement, à une chaîne principale polymérique. Industriellement, ils peuvent être obtenus notamment à partir de la réaction d'un prépolymère à terminaisons isocyanates et d'un composé silylé comprenant des fonctions alkoxysilanes.

Les compositions à base de polymère à terminaisons alkoxysilanes (dénommé également polymère silylé) présentent l'avantage d'être exemptes d'isocyanates libres (une fois que le polymère silylé est formé). Ces compositions constituent donc une alternative, préférée d'un point de vue toxicologique, aux compositions à base de polyuréthane à terminaisons isocyanates.

La réaction de réticulation de ces compositions à base de polymère silylé intervient en présence d'humidité par formation d'une liaison siloxane (-Si-O-Si-) intervenant après hydrolyse des groupements alkoxysilane des molécules de polymère silylé. Ces liaisons unissent les chaînes polymériques en un réseau tridimensionnel solide.

Toutefois, le temps de réticulation de ces polymères silylés doit être accéléré pour répondre aux besoins des utilisateurs.

A cet effet, il est possible d'ajouter un catalyseur de réticulation dans les compositions comprenant les polymères silylés.

Généralement, le catalyseur de réticulation utilisé dans des compositions adhésives et/ou de mastic à base de polymère silylé est un catalyseur métallique, en particulier à base d'étain tel que le dilaurate de dibutylétain (DBTDL), le diacétate de dibutylétain ou le bis(acétylacétonate) de dibutylétain ou de dioctylétain. Cependant, la toxicité de ces catalyseurs, notamment ceux à base d'étain, est de plus en plus mise en avant, conduisant les industriels à limiter, et même éviter leur utilisation, d'autant plus que ces catalyseurs métalliques restent dans les produits finis.

Une alternative aux catalyseurs de réticulation métalliques peut être constituée par les catalyseurs de réticulation organiques aminés, notamment le 1,8-diazabicyclo[5.4.0]undec-7-ène (DBU), le 1,5,7-triazabicyclo[4.4.0]dec-5-ène (TBD) ou le 1,4-diazabicyclo[2.2.2]octane (DABCO). Toutefois, ces derniers ont le désavantage de provoquer une coloration jaune dans les produits finis à cause de la migration du catalyseur en surface de l'adhésif et/ou du mastic.

En outre, la présence de ces catalyseurs métalliques ou organiques aminés dans la composition de polymère silylé entraîne un début de réticulation dès que le polymère est en contact avec de l'eau (provenant notamment de l'humidité de l'air ou de l'eau présente dans les ingrédients de la composition tels que les charges minérales ou les pigments), ce qui peut causer des problèmes de stabilité de la composition lors du stockage et/ou un temps ouvert réduit lors de son utilisation. Le temps ouvert représente la durée entre l'application de la composition sur un substrat et le début de la réticulation de la composition. Or, certaines applications requièrent un long temps ouvert, par exemple pour des substrats à assembler de grande surface et/ou lors des assemblages en ligne.

Il existe donc un besoin de fournir une composition de polymère silylé présentant un temps de réticulation accéléré sans avoir à y ajouter de catalyseur métallique ou organique aminé, une stabilité au stockage améliorée ainsi qu'un temps ouvert aussi long que nécessaire.

### Résumé de l'invention

La présente invention concerne une composition comprenant :
- au moins un polymère silylé, et
- au moins un catalyseur boré protégé de formule (I) B(Rⁱ)(Rⁱⁱ)(ORⁱⁱⁱ) ou de formule (II) B(Rⁱ)(OR^{iv})(OR^{v}),
dans lesquelles :
∘ Rⁱ et Rⁱⁱ, identiques ou différents, représentent indépendamment un groupement aryle substitué ou non, Rⁱ et Rⁱⁱ pouvant être liés entre eux de façon covalente,
∘ Rⁱⁱⁱ, directement ou indirectement lié à l'atome d'oxygène de ORⁱⁱⁱ, représente :
   ▪ un groupement comprenant une structure de type (la) : 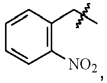 ou
   ▪ un groupement comprenant une structure de type (Ib) : 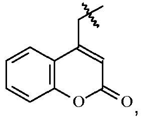
∘ OR^{iv} et OR^{v} sont engagés dans un même cycle et R^{iv} et R^{v}, directement ou indirectement liés à l'atome d'oxygène respectivement de OR^{iv} et OR^{v}, représentent :
   ▪ un groupement comprenant une structure de type (Ila) : 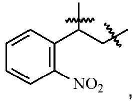 ou
   ▪ un groupement comprenant une structure de type (IIb) :

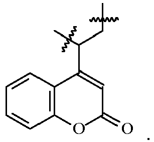

La présente invention concerne également l'utilisation de la composition selon l'invention comme adhésif et/ou mastic.

La présente invention vise aussi un procédé de photoactivation de la composition selon l'invention, comprenant une étape d'irradiation de ladite composition.

La présente invention vise également un procédé d'assemblage de substrats comprenant :
- l'enduction, sur au moins une surface des substrats à assembler, de la composition selon l'invention, puis
- la mise en contact des substrats, et
- la réticulation de la composition,
le procédé d'assemblage de substrats comprenant en outre le procédé de photoactivation selon l'invention mis en oeuvre avant l'étape de mise en contact des substrats.

Enfin, la présente invention concerne un article comprenant la composition selon l'invention, ladite composition liant au moins deux substrats dudit article.

La composition selon l'invention a une stabilité au stockage améliorée ainsi qu'un temps ouvert aussi long que nécessaire. En effet, le catalyseur boré étant protégé, il ne peut pas catalyser la réticulation du polymère silylé, ce qui permet de limiter le risque de réticulation prématurée. Toutefois, dès qu'il a été déprotégé, le catalyseur boré permet d'accélérer la réticulation, conduisant à une composition ayant un temps de réticulation accéléré.

### Description de l'invention

### Composition

### Polymère silylé

Par « polymère silylé », on entend un polymère comportant au moins un groupement alkoxysilane. De préférence, le polymère silylé comprend au moins un groupement alkoxysilane en terminaison du polymère.

Le polymère silylé se présente généralement sous forme de liquide plus ou moins visqueux. Le polymère silylé peut présenter une viscosité à 23°C allant de 1 à 200 Pa.s, de préférence de 5 à 175 Pa.s. La viscosité du polymère silylé peut par exemple être mesurée selon une méthode de type Brookfield à 23°C et 50% d'humidité relative (aiguille S28).

Avantageusement, le polymère silylé comprend au moins un, de préférence au moins deux, groupements alkoxysilane de formule (III) :

-Si(R⁴)ₚ(OR⁵)₃₋ₚ

dans laquelle :
- R⁴ représente un radical alkyl linéaire ou ramifié comprenant de 1 à 4 atomes de carbone, de préférence 1 à 2 atomes de carbone, et lorsque p est égal à 2, les radicaux R⁴ sont identiques ou différents,
- R⁵ représente un radical alkyl linéaire ou ramifié comprenant de 1 à 4 atomes de carbone, de préférence 1 à 2 atomes de carbone, et éventuellement un ou plusieurs hétéroatomes choisis indépendamment parmi l'oxygène et l'azote, et lorsque p est égal à 0 ou 1, les radicaux R⁵ sont identiques ou différents, deux groupements OR⁵ pouvant être engagés dans un même cycle, et
- p est un nombre entier égal à 0, 1 ou 2, de préférence égal à 0 ou 1.

De préférence, les groupements alkoxysilane du polymère silylé sont de formule (III) avec :
- R⁴ et R⁵ représentent chacun un radical méthyle, et
- p est égal à 0 ou 1.

Les divers groupes, radicaux et lettres qui sont compris dans les formules décrites dans le présent texte conservent, tout au long du présent texte, et, en l'absence d'indication contraire, la même définition.

Avantageusement, le polymère silylé a une masse molaire moyenne en nombre comprise entre 500 g/mol et 70000 g/mol, préférentiellement entre 4000 g/mol et 60000 g/mol, plus préférentiellement entre 10000 g/mol et 50000 g/mol.

La masse molaire des polymères peut être mesurée par des méthodes bien connues de l'homme du métier, par exemple par chromatographie d'exclusion stérique en utilisant des étalons de type polystyrène.

Dans le cadre de l'invention, les gammes de valeurs s'entendent bornes incluses. Par exemple, la gamme « comprise entre 0% et 25% » inclus notamment les valeurs 0% et 25%.

Avantageusement, le polymère silylé est de formule (IV), (V) ou (VI) : 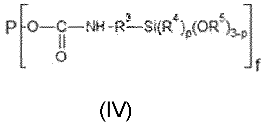 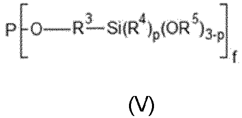 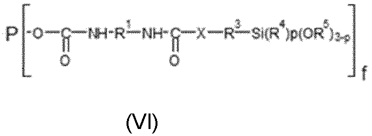 dans lesquelles :
- R⁴, R⁵ et p ont la même signification que dans la formule (III) décrite ci-dessus,
- P représente un radical polymérique saturé ou insaturé, à chaîne ouverte linéaire ou ramifiée, ou comprenant un ou plusieurs cycles éventuellement aromatiques, comprenant éventuellement un ou plusieurs hétéroatomes, tels que oxygène, azote, soufre et/ou silicium, de préférence oxygène et/ou azote,
- R¹ représente un radical divalent hydrocarboné comprenant de 5 à 15 atomes de carbone, saturé ou insaturé, à chaîne ouverte linéaire ou ramifiée, ou comprenant un ou plusieurs cycles éventuellement aromatiques,
- R³ représente un radical divalent alkylène linéaire ou ramifié comprenant de 1 à 6 atomes de carbone, de préférence de 1 à 3 atomes de carbone,
- X représente un radical divalent choisi parmi -NH-, -NR⁷- ou -S-,
- R⁷ représente un radical alkyl linéaire ou ramifié comprenant de 1 à 20 atomes de carbone et pouvant également comprendre un ou plusieurs hétéroatomes, et
- f est un entier allant de 1 à 6, avantageusement de 2 à 5, préférentiellement de 2 à 4, encore plus préférentiellement de 2 à 3.

Avantageusement, le polymère silylé est de formule (IV), (V) ou (VI) avec P représentant un radical polymérique choisi parmi les polyéthers, polycarbonates, polyesters, polyoléfines, polyacrylates, polyamides, polyéther polyuréthanes, polyester polyuréthanes, polyoléfine polyuréthanes, polyacrylate polyuréthanes, polycarbonate polyuréthanes, polyéther/polyester polyuréthanes à blocs et les polysiloxanes, de préférence choisi parmi les polyéthers, les polyuréthanes, les polyéther polyuréthanes, et leurs mélanges, plus préférentiellement parmi les polyéthers.

De préférence, le polymère silylé est de formule (IV'), (IV"), (V') ou (VI') : 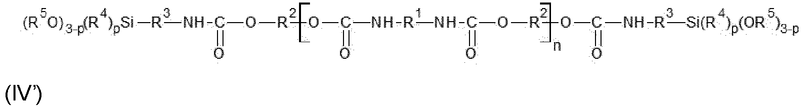 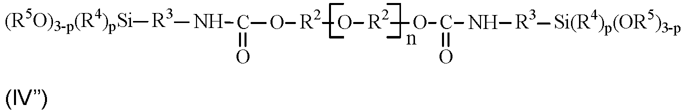 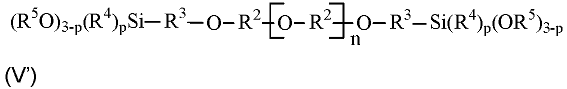 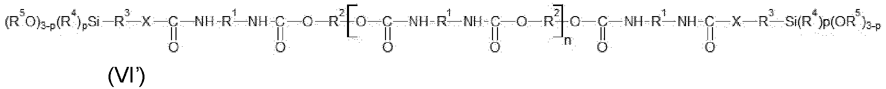 dans lesquelles :
- R¹, R³, R⁴, R⁵, X, R⁷ et p ont la même signification que dans les formules (IV), (V) et (VI),
- R² représente un radical divalent hydrocarboné saturé ou insaturé, linéaire ou ramifié comprenant éventuellement un ou plusieurs hétéroatomes, tels que oxygène, azote, soufre, silicium,
- n est un entier, de préférence n est tel que la masse molaire moyenne en nombre du polymère silylé est comprise entre 500 g/mol et 70000 g/mol, plus préférentiellement entre 4000 g/mol et 60000 g/mol, encore plus préférentiellement entre 10000 g/mol et 50000 g/mol.

Dans les polymères silylés de formules (IV'), (IV"), (V') ou (VI') définies ci-dessus, lorsque le radical R² comprend un ou des hétéroatomes, ledit ou lesdits hétéroatomes ne sont pas présents en bout de chaîne. Autrement dit, les valences libres du radical divalent R² liées aux atomes d'oxygène voisin du polymère silylé, proviennent chacune d'un atome de carbone. Ainsi, la chaine principale du radical R² est terminée par un atome de carbone à chacune des deux extrémités, ledit atome de carbone présentant alors une valence libre.

Selon un mode de réalisation, les polymères silylés sont obtenus à partir de polyols choisis parmi les polyéthers polyols, les polyesters polyols, les polycarbonates polyols, les polyacrylates polyols, les polyamides polyols, les polysiloxanes polyols, les polyoléfines polyols, et leurs mélanges, de préférence à partir de diols choisis parmi les polyéthers diols, les polyesters diols, les polycarbonates diols, les polyacrylates diols, les polyamides diols, les polysiloxanes diols, les polyoléfines diols, et leurs mélanges, plus préférentiellement parmi les polyéthers diols. Dans le cas des polymères de formules (IV'), (IV"), (V') ou (VI') décrites ci-dessus, de tels diols peuvent être représentés par la formule HO-R²-OH ou H-[O- R²]ₙ-OH, où R² a la même signification que dans les formules (IV'), (IV"), (V') ou (VI').

En particulier, dans le polymère silylé de formule (VI') définie ci-dessus, le radical R² peut être identique ou différent, c'est-à-dire que le polymère silylé de formule (VI') peut être un copolyuréthane silylé obtenu à partir de diols HO-R²-OH identiques ou différents.

Selon un mode de réalisation, lorsque le polymère silylé est de formule (IV') ou (VI'), le radical R² peut être choisi parmi les radicaux divalents suivants dont les formules ci-dessous font apparaître les deux valences libres :
- dérivé d'un polypropylène glycol : 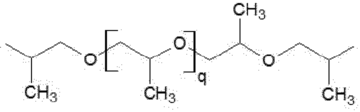
- dérivé d'un polyester diol : 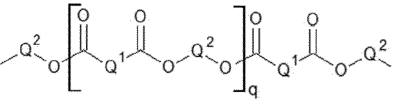
- dérivé d'un polybutadiène diol : 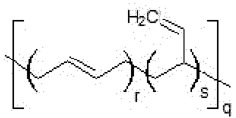
- dérivé d'un polyacrylate diol : 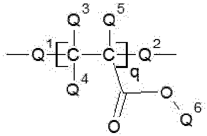
- dérivé d'un polysiloxane diol : 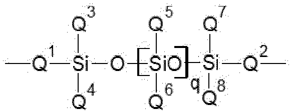
dans lesquelles :
- q représente un entier tel que la masse molaire en nombre du radical R² va de 100 g/mol à 48600 g/mol, de préférence de 300 g/mol à 18600 g/mol, de préférence encore de 500 g/mol à 12600 g/mol,
- r et s représentent zéro ou un entier non nul tel que la masse molaire moyenne en nombre du radical R² va de 100 g/mol à 48600 g/mol, de préférence de 300 g/mol à 18600 g/mol, de préférence encore de 500 g/mol à 12600 g/mol, étant entendu que la somme r+s est différente de zéro,
- Q¹ représente un radical alkylène divalent aromatique ou aliphatique linéaire ou ramifié, saturé ou insaturé, présentant de préférence de 1 à 18 atomes de carbone, de préférence encore de 1 à 8 atomes de carbone,
- Q² représente un radical alkylène divalent linéaire ou ramifié présentant de préférence de 2 à 36 atomes de carbone, de préférence encore de 1 à 8 atomes de carbone,
- Q³, Q⁴, Q⁵, Q⁶, Q⁷ et Q⁸, représentent, indépendamment les uns des autres, un atome d'hydrogène ou un radical alkyle, alkényle ou aromatique, présentant de préférence de 1 à 12 atomes de carbone, de préférence de 2 à 12 atomes de carbone, de préférence encore de 2 à 8 atomes de carbone.

Selon un mode de réalisation, R¹ est choisi parmi les radicaux divalents suivants dont les formules ci-dessous font apparaître les deux valences libres :
a) le radical divalent dérivé de l'isophorone diisocyanate (IPDI) : 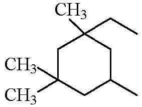
b) le radical divalent dérivé du dicyclohexylméthane diisocyanate (H12MDI) : 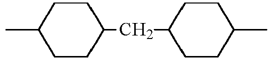
c) les radicaux divalents dérivés des isomères 2,4- et 2,6- du toluène diisocyanate (TDI) : 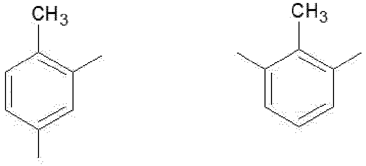
d) les radicaux divalents dérivés des isomères 4,4' et 2,4'- du diphénylméthane diisocyanate (MDI) : 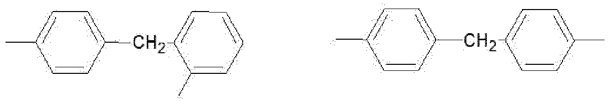
e) le radical divalent dérivé de l'hexaméthylène diisocyanate (HDI) : -(CH₂)₆-
f) le radical divalent dérivé du m-xylylène diisocyanate (m-XDI) : 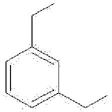
g) le radical divalent dérivé du pentaméthylène diisocyanate (PDI)

-(CH₂)₅-

Selon un mode de réalisation préféré, le polymère silylé est de formule (IV") ou (V'), préférentiellement (V'), et le radical R² représente de préférence un radical divalent alkylène linéaire ou ramifié comprenant de 2 à 4 atomes de carbone, plus préférentiellement un radical divalent alkylène linéaire ou ramifié comprenant 3 atomes de carbone, encore plus préférentiellement un radical iso-propylène (de formule -CH₂-CH(CH₃)-).

Selon un mode de réalisation particulier, le polymère silylé est un polymère de formule (V') dans laquelle :
- R² représente un radical iso-propylène,
- R⁴ et R⁵ représentent chacun un radical méthyle, et
- p est égal à 1.

Les polymères de formule (IV), (IV') ou (IV") peuvent être obtenus selon un procédé décrit par exemple dans les documents EP 2336208 et WO 2009/106699.

Les polymères de formule (V) ou (V') peuvent être obtenus par hydrosilylation de polyéther diallyléther selon un procédé décrit par exemple dans le document EP 1829928.

Les polymères de formule (VI) ou (VI') peuvent par exemple être obtenus par réaction de polyol(s) avec un ou des diisocyanate(s) suivie d'une réaction avec des aminosilanes ou des mercaptosilanes. Un procédé de préparation de polymères de formule (VI) ou (VI') est décrit par exemple dans le document EP 2583988. L'homme du métier saura adapter le procédé de fabrication décrit dans ce document dans le cas de l'utilisation de différents types de polyols.

La teneur en au moins un polymère silylé dans la composition selon l'invention peut être comprise entre 5 % et 99 % en poids par rapport au poids total de la composition. La teneur en au moins un polymère silylé peut dépendre de l'utilisation de la composition selon l'invention. Par exemple, pour une utilisation comme mastic, la teneur en au moins un polymère silylé peut être comprise entre 5 % et 50 % en poids par rapport au poids total de la composition, de préférence entre 10 % et 40 % en poids ; pour une utilisation comme adhésif sensible à la pression, la teneur en au moins un polymère silylé peut être comprise entre 10 % et 99 % en poids par rapport au poids total de la composition, de préférence entre 15 % et 90 % en poids, plus préférentiellement entre 20 % et 80 % en poids.

### Catalyseur boré protégé

Lors du stockage de la composition selon l'invention, le polymère silylé est sous forme non-réticulée. La réticulation du polymère silylé s'effectue après que le catalyseur boré protégé ait été déprotégé, notamment sous irradiation ultraviolette, et lorsque la composition est en présence d'humidité (permettant l'hydrolyse de groupements alkoxysilanes), notamment de l'humidité de l'air. En effet, une fois déprotégé, le catalyseur boré permet de réticuler le polymère silylé, en particulier par condensation de groupements alkoxysilanes hydrolysés (silanols) pour former des liaisons siloxane (-Si-O-Si-).

Le catalyseur boré protégé permet de limiter le risque de réticulation prématurée du polymère silylé. Ainsi, la composition selon l'invention a une stabilité au stockage améliorée ainsi qu'un temps ouvert aussi long que nécessaire.

La composition selon l'invention comprend au moins un catalyseur boré protégé de formule (I) B(Rⁱ)(Rⁱⁱ)(ORⁱⁱⁱ) ou de formule (II) B(Rⁱ)(OR^{iv})(OR^{v}), en particulier de formule (II).

### • Rⁱ et Rⁱⁱ

Rⁱ et Rⁱⁱ, identiques ou différents, représentent indépendamment un groupement aryle substitué ou non, de préférence substitué, et Rⁱ et Rⁱⁱ pouvant être liés entre eux de façon covalente, notamment par le biais d'un hétéroatome (de préférence un oxygène). Rⁱ et Rⁱⁱ sont directement liés à l'atome de bore dans les formules (I) et (II).

Par « groupement aryle », on entend un groupement mono- ou polycyclique aromatique comprenant éventuellement un ou plusieurs hétéroatomes (comme l'oxygène, l'azote, le soufre).

Par exemple, Rⁱ et Rⁱⁱ peuvent être choisis indépendamment parmi un groupement phényle, naphtyle, anthracényle, coumarinyle, pyridinyle, pyrazinyle, pyridazinyle, pyrimidinyle, indolyle, acrydinyle, quinolinyle, furanyle, pyrrolyle et thiényle (chaque groupement étant substitué ou non), de préférence parmi un groupement phényle, naphtyle, pyridinyle, furanyle et thiényle, plus préférentiellement un groupement phényle.

Lorsque le groupement aryle est substitué, le(s) substituant(s) peu(ven)t être, par exemple, un alkyle (linéaire, ramifié ou cyclique) ayant de préférence 1 à 5 atomes de carbone, un halogène, un groupement amine, un groupement amide, un groupement carbamate, un groupement alkoxy, un groupement ester, un groupement cétone, un groupement formyle, un groupement nitro, un groupement hydroxyle, un groupement cyano, un groupement trifluorométhyle, un groupement silyle (par exemple trialkylsilyle), un ester de sulfonate (par exemple triflate) et/ou un groupement sulfonyle (par exemple triflyle, méthanesulfonyle : -SO₂CH₃).

Avantageusement, chaque substituant est indépendamment choisi parmi un alkyle ayant de préférence 1 à 5 atomes de carbone, un halogène, un groupement diarylamino, un groupement dialkylamino, un groupement amide primaire (notamment -C(=O)NH₂, -C(=O)NHCH₃, -C(=O)NHCH₂CH₃, -C(=O)N(CH₃)₂, - C(=O)N(CH₂CH₃)₂), un groupement carbamate d'alkyle en C1-C5 (notamment de t-butyle : -NH-C(=O)OC(CH₃)₃), un groupement méthoxy, un groupement éthoxy, un groupement ester méthylique (-C(=O)OCH₃), un groupement ester éthylique, une méthyl cétone (-C(=O)CH₃), une éthyl cétone, un groupement nitro, un groupement hydroxyle, un groupement cyano, un groupement trifluorométhyle, un groupement triméthylsilyle, un groupement triéthylsilyle, un groupement t-butyldiméthylsilyle, un groupement méthanesulfonyle et un groupement éthanesulfonyle.

De préférence, chaque substituant est indépendamment choisi parmi un alkyle ayant 1 à 5 atomes de carbone, un halogène, un groupement diphénylamino, un groupement amide -C(=O)NH₂, un groupement carbamate de t-butyle, un groupement méthoxy, un groupement ester méthylique, une méthyl cétone, un groupement nitro, un groupement hydroxyle, un groupement cyano, un groupement trifluorométhyle, un groupement triméthylsilyle et un groupement méthanesulfonyle.

Plus préférentiellement, chaque substituant est indépendamment choisi parmi le fluor, le chlore, un groupement nitro et un groupement trifluorométhyle.

Encore plus préférentiellement, chaque substituant est indépendamment choisi parmi le fluor, un groupement nitro et un groupement trifluorométhyle.

Selon un mode de réalisation, Rⁱ et Rⁱⁱ sont choisis indépendamment parmi les groupements suivants :

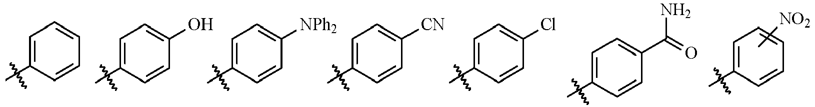

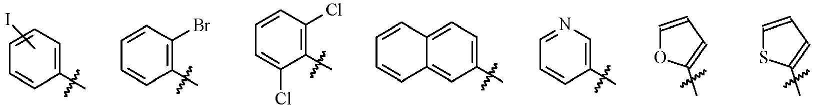

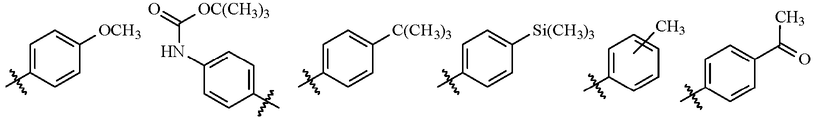

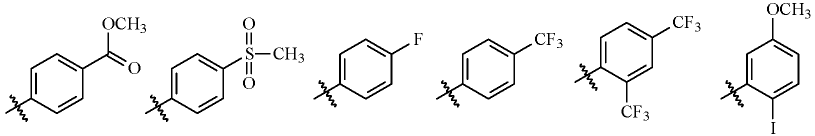

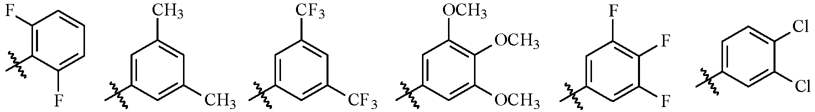

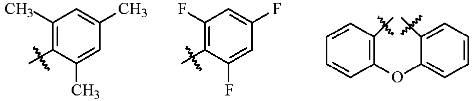

De préférence, Rⁱ et Rⁱⁱ sont choisis indépendamment parmi les groupements suivants :

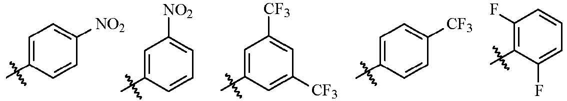

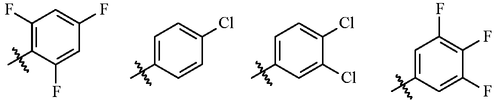

Plus préférentiellement, Rⁱ et Rⁱⁱ sont choisis indépendamment parmi les groupements suivants :

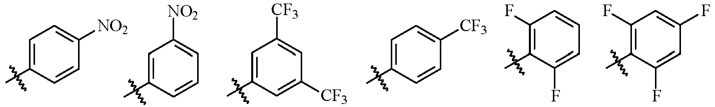

En particulier, Rⁱ et Rⁱⁱ sont le groupement suivant :

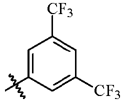

### • Rⁱⁱⁱ

Rⁱⁱⁱ est directement ou indirectement lié à l'atome d'oxygène de ORⁱⁱⁱ (ORⁱⁱⁱ étant directement lié à l'atome de bore) et représente :
- un groupement comprenant une structure de type (la) : 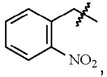 ou
- un groupement comprenant une structure de type (Ib) :

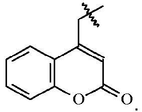

De préférence, Rⁱⁱⁱ représente un groupement comprenant une structure de type (la).

Par « groupement comprenant une structure de type (la) (ou (Ib)) », on entend un groupement comprenant l'enchaînement d'atomes représenté par la structure (la) (ou (Ib)) ; en particulier, des substituants peuvent être présents.

Selon un mode de réalisation, Rⁱⁱⁱ est directement lié à l'atome d'oxygène de ORⁱⁱⁱ, et ORⁱⁱⁱ est choisi parmi les groupements suivants :

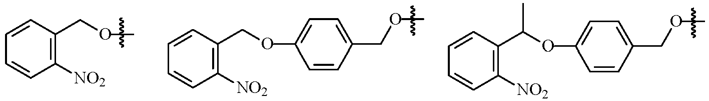

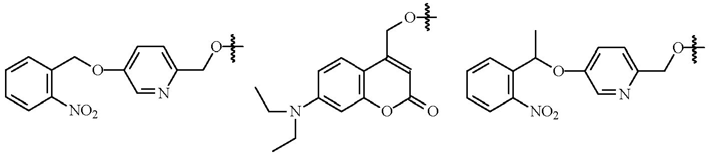

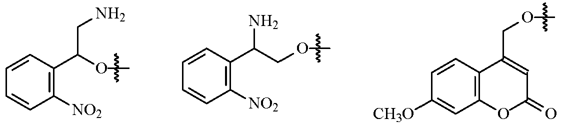

De préférence, Rⁱⁱⁱ est directement lié à l'atome d'oxygène de ORⁱⁱⁱ et ORⁱⁱⁱ est choisi parmi les groupements suivants :

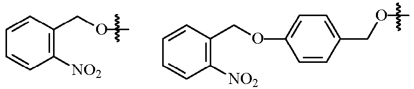

### • R^{iv} et R^{v}

R^{iv} et R^{v} sont directement ou indirectement liés à l'atome d'oxygène respectivement de OR^{iv} et OR^{v} (OR^{iv} et OR^{v} étant directement liés à l'atome de bore) et représentent :
- un groupement comprenant une structure de type (Ila) : 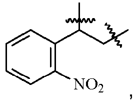 ou
- un groupement comprenant une structure de type (Ilb) :

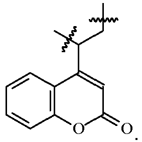

De préférence, R^{iv} et R^{v} représentent un groupement comprenant une structure de type (Ila).

Par « groupement comprenant une structure de type (IIa) (ou (IIb)) », on entend un groupement comprenant l'enchaînement d'atomes représenté par la structure (Ila) (ou (llb)) ; en particulier, des substituants peuvent être présents.

Selon un mode de réalisation, R^{iv} et R^{v} sont directement liés à l'atome d'oxygène respectivement de OR^{iv} et OR^{v}, et OR^{iv} et OR^{v} sont choisis parmi les groupements suivants :

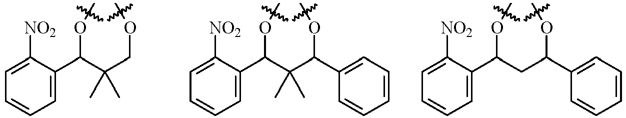

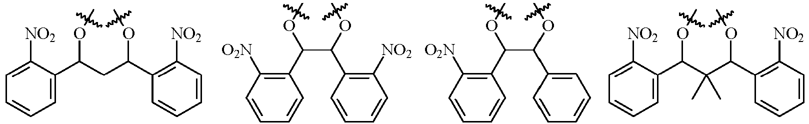

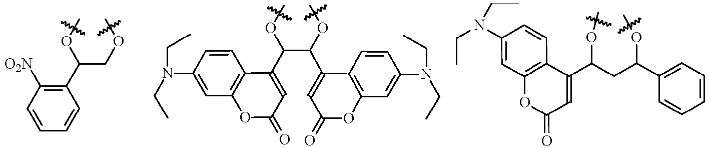

De préférence, R^{iv} et R^{v} sont directement liés à l'atome d'oxygène respectivement de OR^{iv} et OR^{v}, et OR^{iv} et OR^{v} sont choisis parmi les groupements suivants :

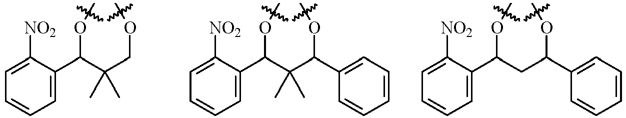

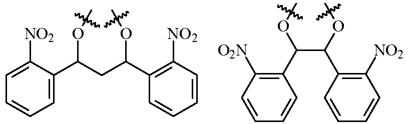

En particulier, R^{iv} et R^{v} sont directement liés à l'atome d'oxygène respectivement de OR^{iv} et OR^{v}, et OR^{iv} et OR^{v} sont représentés par le groupement suivant :

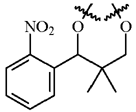

### • Autres caractéristiques du catalyseur boré protégé

Selon un mode de réalisation particulier, la composition selon l'invention comprend au moins un catalyseur boré protégé de formule (I) ou de formule (II) dans lesquelles :
- Rⁱ et Rⁱⁱ sont choisis indépendamment parmi un groupement phényle, naphtyle, pyridinyle, furanyle et thiényle, chaque groupement étant optionnellement substitué par un ou plusieurs substituants indépendamment choisi parmi le fluor, le chlore, un groupement nitro et un groupement trifluorométhyle,
- Rⁱⁱⁱ est directement lié à l'atome d'oxygène de ORⁱⁱⁱ, et ORⁱⁱⁱ est choisi parmi les groupements suivants : 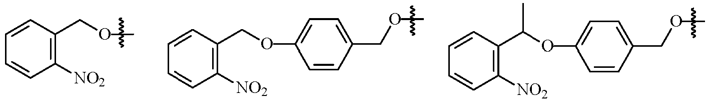 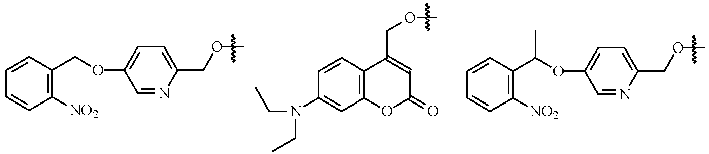 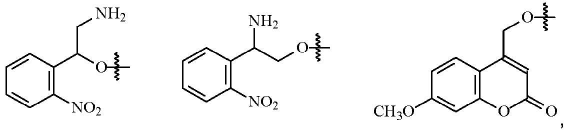 et
- R^{iv} et R^{v} sont directement liés à l'atome d'oxygène respectivement de OR^{iv} et OR^{v}, et OR^{iv} et OR^{v} sont choisis parmi les groupements suivants :

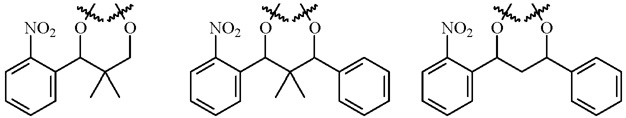

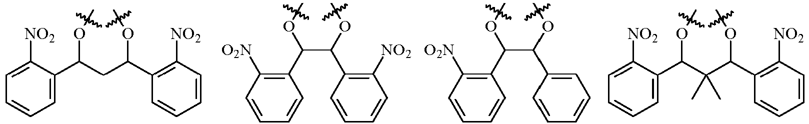

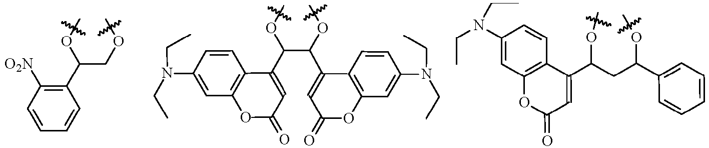

De préférence, dans les formules (I) et (II) :
- Rⁱ et Rⁱⁱ sont choisis indépendamment parmi les groupements suivants : 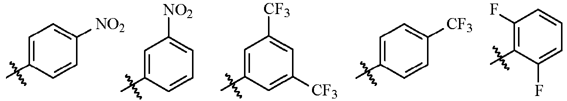 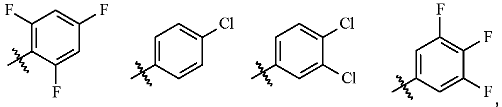
- Rⁱⁱⁱ est directement lié à l'atome d'oxygène de ORⁱⁱⁱ et ORⁱⁱⁱ est choisi parmi les groupements suivants : 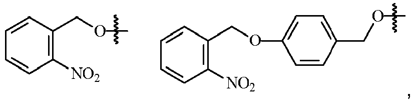 et
- R^{iv} et R^{v} sont directement liés à l'atome d'oxygène respectivement de OR^{iv} et OR^{v}, et OR^{iv} et OR^{v} sont choisis parmi les groupements suivants :

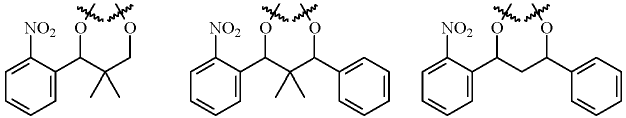

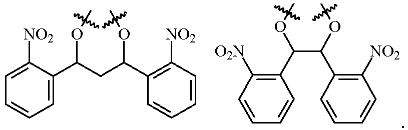

En particulier, dans les formules (I) et (II) :
- Rⁱ et Rⁱⁱ sont choisis indépendamment parmi les groupements suivants : 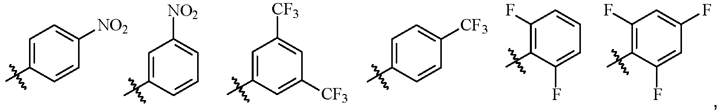
- Rⁱⁱⁱ est directement lié à l'atome d'oxygène de ORⁱⁱⁱ et ORⁱⁱⁱ est choisi parmi les groupements suivants : 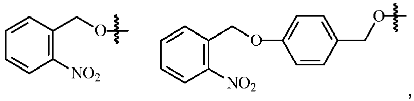 et
- R^{iv} et R^{v} sont directement liés à l'atome d'oxygène respectivement de OR^{iv} et OR^{v}, et OR^{iv} et OR^{v} sont choisis parmi les groupements suivants :

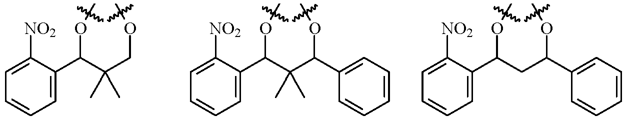

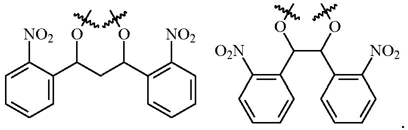

Par exemple, la composition selon l'invention peut comprendre au moins un catalyseur boré protégé de formule (II) choisi parmi : 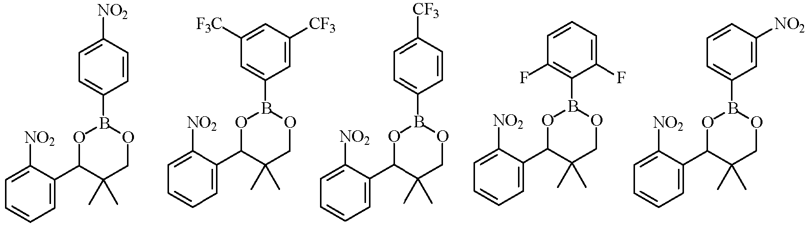 notamment :

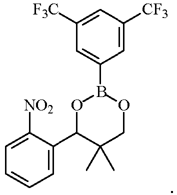

La teneur en catalyseur boré protégé peut être comprise entre 0,05 % et 10 % en poids par rapport au poids total du au moins un polymère silylé, de préférence entre 0,5 % et 5 % en poids.

Le catalyseur boré protégé de formule (I) peut être préparé par réaction d'un catalyseur boré de formule (I') B(Rⁱ)(Rⁱⁱ)(OH) avec un alcool HORⁱⁱⁱ, Rⁱ, Rⁱⁱ et Rⁱⁱⁱ étant tels que décrits ci-avant (y inclus les modes de réalisation et caractéristiques préférées).

Le catalyseur boré protégé de formule (II) peut être préparé par réaction d'un catalyseur boré de formule (II') B(Rⁱ)(OH)₂ avec un alcool HOR^{iv}-R^{v}OH, Rⁱ, R^{iv} et R^{v} étant tels que décrits ci-avant (y inclus les modes de réalisation et caractéristiques préférées).

### Additifs

La composition selon l'invention peut comprendre en outre un ou plusieurs additifs, notamment choisis parmi les charges, les promoteurs d'adhésion, les plastifiants, les solvants, les agents rhéologiques, les absorbeurs d'humidité, les pigments, les stabilisants UV (ou antioxydants), et leurs mélanges.

La teneur totale en additifs peut aller jusqu'à 95 % en poids par rapport au poids total de la composition, de préférence jusqu'à 80 % en poids.

### • Charge

Avantageusement, la composition selon l'invention comprend en outre une charge.

La charge peut être choisie parmi les charges minérales, les charges organiques et les mélanges de charges organiques et de charges minérales.

A titre d'exemple de charge minérale, on peut citer n'importe quelle charge minérale habituellement utilisée dans le domaine des compositions adhésives et/ou de mastic. Ces charges se présentent sous la forme de particules de géométrie diverse. Elles peuvent être par exemples sphériques, fibreuses, ou présenter une forme irrégulière.

Par exemple, la charge minérale peut être choisie parmi les charges siliceuses et silicatées (par exemple argiles, quartz, silice, talc, mica, ...), les charges sulfatées (par exemple gypse...), les oxydes et hydroxydes d'aluminium, les charges carbonatées, les microsphères creuses minérales, et leurs mélanges.

Parmi les microsphères creuses minérales, on peut citer les microsphères creuses de verre, et plus particulièrement celles en borosilicate de sodium et de calcium ou en aluminosilicate.

De préférence, les charges minérales sont formées par le groupe constitué des charges carbonatées.

Avantageusement, la charge carbonatée est choisie parmi les carbonates de métaux alcalin ou alcalino-terreux et leurs mélanges. De préférence, la charge carbonatée comprend du carbonate de calcium, plus préférentiellement la charge carbonatée est de la craie ou du carbonate de calcium enrobé d'acides gras, par exemple du carbonate de calcium précipité enrobé d'acides gras.

Lorsque le carbonate de calcium est enrobé d'acides gras, cela permet de conférer une hydrophobie totale ou partielle aux particules de carbonate de calcium. De plus, l'enrobage d'acides gras joue le rôle de revêtement hydrophobe qui peut permettre d'empêcher que le carbonate de calcium n'absorbe les constituants de la composition et ne les rende inefficaces. Le revêtement hydrophobe du carbonate de calcium peut représenter de 0,1% à 3,5% en poids, par rapport au poids total de carbonate de calcium.

De préférence, les acides gras enrobant le carbonate de calcium comprennent ou sont constitués à plus de 50 % en poids de l'acide stéarique par rapport au poids total des acides gras.

A titre d'exemple de charge organique, on peut citer n'importe quelle charge organique, notamment polymérique, habituellement utilisée dans le domaine des compositions adhésives et/ou de mastic.

Par exemple, la charge organique peut être choisie parmi le polychlorure de vinyle (PVC), les polyoléfines, le caoutchouc, l'éthylène vinyl acétate (EVA), les microsphères creuses en polymère thermoplastique expansibles ou non expansibles (telles que des microsphères creuses en chlorure de vinylidène/acrylonitrile), les fibres aramides (telles que le Kevlar^{®}), et leurs mélanges.

La taille de particules moyenne de la charge peut être comprise entre 10 nm et 400 µm, de préférence entre 20 nm et 100 µm, plus préférentiellement entre 30 nm et 30 µm.

La taille de particules moyenne correspond avantageusement à la granulométrie d50, c'est-à-dire la taille maximale de 50% des plus petites particules en volume, et peut être mesurée avec un granulomètre, notamment par diffraction laser sur un appareil de type MALVERN (par exemple selon la norme NF ISO 13320).

Sauf indication contraire, les normes mentionnées dans toute la demande sont celles en vigueur à la date de dépôt de la demande.

La teneur en charge peut aller jusqu'à 80 % en poids par rapport au poids total de la composition, par exemple entre 20 % et 70 % en poids, de préférence entre 30 % et 60 % en poids.

### • Promoteur d'adhésion

La composition selon l'invention peut comprendre en outre un promoteur d'adhésion.

Le promoteur d'adhésion peut être choisi parmi les amino-, mercapto- et époxy-alkoxysilanes, et leurs mélanges. De préférence, le promoteur d'adhésion est choisi parmi les amino-, mercapto- et époxy-trialkoxysilanes, et leurs mélanges.

A titre d'exemple d'époxy-alkoxysilane, on peut citer le (3-glycidyloxypropyl)triméthoxysilane (également dénommé GLYMO).

Avantageusement, les aminotriméthoxysilanes sont formés par le groupe constitué du 4-amino-3,3-diméthylbutyltriméthoxysilane (par exemple le SILQUEST A-LINK 600 commercialisé par MOMENTIVE), du (3-aminopropyl)triméthoxysilane (par exemple le DYNASYLAN^{®} AMMO commercialisé par EVONIK), du N-(3-(triméthoxysilyl)propyl)éthylènediamine (par exemple le GENIOSIL^{®} GF9 commercialisé par la société WACKER), et leurs mélanges.

La teneur en promoteur d'adhésion peut aller jusqu'à 5 % en poids par rapport au poids total de la composition, par exemple entre 0,1 % et 5 % en poids, de préférence entre 0,2 % et 3 % en poids, plus préférentiellement entre 0,5 % et 2 % en poids.

### • Plastifiant

La composition selon l'invention peut comprendre en outre un plastifiant.

Le plastifiant peut être n'importe quel plastifiant habituellement utilisé dans le domaine des compositions adhésives et/ou de mastic.

Par exemple, le plastifiant peut être choisi parmi les mélanges d'esters méthyliques d'acides gras (en particulier d'acides gras comprenant 18 atomes de carbone tels que les acides gras issus de l'huile de ricin comprenant notamment l'acide ricinoléique), les mélanges d'esters d'acides alkylsulphoniques et de phénol (tel que le mélange identifié par le n° CAS 91082-17-6, en particulier le MESAMOLL^{®}), le diisodécyl phtalate, le diisononyl phtalate, l'ester diisononylique de l'acide 1,2-cyclohexanedicarboxylique, le tétravalérate de pentaérythritol, une résine polysiloxane (en particulier un silsesquioxane de masse molaire moyenne en nombre Mn allant de 400 g/mol à 4000 g/mol, préférentiellement de 500 g/mol à 2500 g/mol), et leurs mélanges.

La teneur en plastifiant peut aller jusqu'à 15 % en poids par rapport au poids total de la composition, de préférence jusqu'à 10 % en poids.

### • Solvant

La composition selon l'invention peut comprendre en outre un solvant.

Le solvant peut être choisi parmi les hydrocarbures aliphatiques (tels que le pentane, l'hexane, l'heptane, l'octane, le nonane, le décane, le dodécane, l'isohexane, l'isooctane, l'isododécane, le tétradécane, le dodécylbenzène, le cyclohexane, le kérosène et le naphtène), les hydrocarbures halogénés (tels que tétrachlorure de carbone, chloroforme, dichlorométhane, bromure d'éthyle, trichloroéthylène, tétrachloroéthylène, trifluoroéthylène, tétrafluoroéthylène, trichlorotrifluoroéthylène et tétrachlorodifluoroéthylène), les esters (tels que l'acétate de méthyle, l'acétate d'éthyle et l'acétate de propyle), les éthers (tels que l'éther diéthylique et le tétrahydrofurane), et leurs mélanges, de préférence parmi les éthers, en particulier l'éther diéthylique.

La teneur en solvant peut aller jusqu'à 10 % en poids par rapport au poids total de la composition, de préférence jusqu'à 5 % en poids.

### • Agent rhéologique

La composition selon l'invention peut comprendre en outre un agent rhéologique.

L'agent de rhéologie peut être n'importe quel agent de rhéologie habituellement utilisé dans le domaine des compositions adhésives et/ou de mastic.

Par exemple, l'agent de rhéologie peut être choisi parmi:
- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6,
- la silice pyrogénée, telle que le HDK^{®} N20 commercialisé par WACKER,
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172,

- les cires d'amides, de préférence micronisées, telles que le CRAYVALLAC^{®} SLX, le CRAYVALLAC^{®} SLW ou le CRAYVALLAC^{®} SUPER commercialisés par Arkema, ou bien le THIXATROL^{®} AS8053 ou le THIXATROL^{®} MAX (N° EC : 432-430-3) qui sont disponibles chez ELEMENTIS, ou encore le RHEOBYK 7503 commercialisé par BYK, et
- leurs mélanges.

Par « cires d'amides », on entend des cires comprenant un ou plusieurs composés présentant au moins un groupement amide. En particulier, les cires d'amides peuvent être obtenues à partir d'acide(s) gras (par exemple l'acide ricinoléique) et de (di)amine(s).

Par « micronisé », on entend une taille de particules moyenne inférieure à 1 mm, avantageusement inférieure à 500 µm, de préférence inférieure à 100 µm, plus préférentiellement inférieure à 10 µm.

La taille de particules moyenne correspond avantageusement à la granulométrie d50, c'est-à-dire la taille maximale de 50% des plus petites particules en volume, et peut être mesurée avec un granulomètre, notamment par diffraction laser sur un appareil de type MALVERN (par exemple selon la norme NF ISO 13320).

La teneur en agent de rhéologie peut aller jusqu'à 30 % en poids par rapport au poids total de la composition, de préférence jusqu'à 20% en poids.

### • Absorbeur d'humidité

La composition selon l'invention peut comprendre en outre un absorbeur d'humidité.

Un absorbeur d'humidité (ou agent desséchant) approprié est notamment un alkoxysilane tel qu'un trialkoxysilane (particulièrement un triméthoxysilane).

Par exemple, l'absorbeur d'humidité peut être choisi parmi le vinyltriméthoxysilane, le triméthoxyméthylsilane, le propyltriméthoxysilane, le vinyltriéthoxysilane, les alkoxyarylsilanes (par exemple le GENIOSIL^{®} XL 70 commercialisé par WACKER), et leurs mélanges.

La teneur en absorbeur d'humidité peut aller jusqu'à 5 % en poids par rapport au poids total de la composition, de préférence jusqu'à 3 % en poids.

### • Pigment

La composition selon l'invention peut comprendre en outre un pigment.

Par exemple, le pigment peut être choisi parmi les pigments organiques, les pigments inorganiques et leurs mélanges, par exemple parmi le dioxyde de titane, le noir de carbone, la ferrite de manganèse, et leurs mélanges.

La teneur en pigment peut aller jusqu'à 5 % en poids par rapport au poids total de la composition, de préférence jusqu'à 3 % en poids.

### • Stabilisant UV (ou antioxydant)

La composition selon l'invention peut comprendre en outre un stabilisant UV (ou antioxydant).

Un stabilisant UV est typiquement introduit pour éviter une dégradation résultant d'une réaction avec de l'oxygène qui est susceptible de se former par action de la chaleur ou de la lumière. Les stabilisants UV peuvent inclure des antioxydants capables de piéger les radicaux libres.

Par exemple, le stabilisant UV (ou antioxydant) peut être choisi parmi les benzotriazoles, les benzophénones, les phénols dits encombrés (tels que le bis[3-(5-tert-butyl-4-hydroxy-m-tolyl)propionate] d'éthylènebis(oxyéthylène), le 2,2'-méthylènebis(6-(tert-butyl)-4-méthylphénol), le 2,2'-méthylènebis(6-(tert-butyl)-4-éthylphenol), le 2,2'-méthylènebis(4-méthyl-6-cyclohexylphénol), le 2,2'-méthylènebis(4,6-di(tert-butyl)phénol), le 4,4'-méthylènebis(2,6-di(tert-butyl)phénol), le 2,6-di(tert-butyl)-4-méthylphénol), les amines dites encombrées (telles que le bis(1-octyloxy-2,2,6,6-tétraméthyl-4-pipéridyl)sébacate, le bis(2,2,6,6-tétraméthyl-4-pipéridyl)sébacate, le bis(1,2,2,6,6-pentaméthyl-4-pipéridyl)sébacate (N° CAS : 41556-26-7), le méthyl 1,2,2,6,6-pentaméthyl-4-pipéridyl sébacate (N° CAS : 82919-37-7), le 3-(3,5-di-tert-butyl-4-hydroxyphényl)propionate d'octadécyle, le 4,4'-bis(α,α-diméthylbenzyl)diphénylamine), et leurs mélanges. On peut par exemple citer les produits Irganox^{®}245, Irganox^{®} 1076, TINUVIN^{®}292, TINUVIN^{®} 765 ou TINUVIN^{®} 770 DF commercialisés par BASF et RIASORB UV-123 commercialisé par RIANLON.

Les phénols dits encombrés sont généralement des phénols substitués par au moins un groupe volumineux (tel que le tert-butyle) de préférence en position ortho par rapport au groupe hydroxy.

La teneur en stabilisant UV (ou antioxydant) peut aller jusqu'à 5 % en poids par rapport au poids total de la composition, par exemple entre 0,1 % et 5 % en poids, de préférence entre 0,5 % et 3 % en poids.

### Autres caractéristiques

Avantageusement, la composition selon l'invention a une teneur en catalyseur de réticulation autre qu'un catalyseur boré protégé (notamment de formule (I) ou (II) telles que définies ci-avant) inférieure à 0,05 % en poids par rapport au poids total de la composition, de préférence inférieure à 0,02 % en poids, plus préférentiellement inférieure à 0,015 % en poids.

Par « catalyseur de réticulation », on entend un catalyseur connu par l'homme du métier pour la condensation de silanol.

On peut citer comme exemples de catalyseurs de réticulation pour la condensation de silanol des catalyseurs métalliques et/ou organiques aminés, notamment :
- des dérivés organiques du titane comme l'acétyl acétonate de titane, le tétrapropylate de titane, le tétrabutylate de titane,
- des dérivés organiques du zirconium comme l'acétyl acétonate de zirconium, le tétrapropylate de zirconium, le tétrabutylate de zirconium,
- des dérivés organiques du bismuth comme le néodécanoate de bismuth,
- des amines comme le 1,8-diazabicyclo[5.4.0]undéc-7-ène (DBU), le 1,5-diazabicyclo[4.3.0]non-5-ène (DBN), l'éther diéthylique-2,2'-morpholine (DMDEE), le 1,4-diazabicylo[2.2.2]octane (DABCO), le 1,5,7-triazabicyclo[4.4.0]dec-5-ène (TBD),
- les catalyseurs à base de carboxylate de zinc (par exemple l'octoate de zinc),
- les catalyseurs à base d'étain tels que les composés dérivés de dioctylétain ou de dibutylétain.

La composition selon l'invention peut se présenter sous la forme d'une composition mono-composante ou bicomposante.

Selon un premier mode de réalisation, la composition selon l'invention est une composition mono-composante comprenant :
- entre 5 % et 99 % en poids d'au moins un polymère silylé, de préférence de formule (IV), (V) ou (VI), par rapport au poids total de la composition,
- entre 0,05 % et 10 % en poids d'au moins un catalyseur boré protégé de formule (I) ou de formule (II) par rapport au poids total du au moins un polymère silylé, dans lesquelles Rⁱ et Rⁱⁱ sont de préférence choisis indépendamment parmi un groupement phényle, naphtyle, pyridinyle, furanyle et thiényle, chaque groupement étant optionnellement substitué par un ou plusieurs substituants indépendamment choisi parmi le fluor, le chlore, un groupement nitro et un groupement trifluorométhyle, et
- optionnellement jusqu'à 95 % en poids d'un ou plusieurs additifs par rapport au poids total de la composition, le ou les additifs étant de préférence choisis parmi les charges, les promoteurs d'adhésion, les plastifiants, les solvants, les agents rhéologiques, les absorbeurs d'humidité, les pigments, les stabilisants UV (ou antioxydants), et leurs mélanges.

De préférence, la composition mono-composante est constituée essentiellement des ingrédients mentionnés ci-avant. Par « constituée essentiellement », on entend que la composition mono-composante comprend moins de 5 % en poids d'ingrédients autres que les ingrédients susmentionnés, par rapport au poids total de ladite composition, de préférence moins de 2 % en poids, encore plus préférentiellement moins de 1 % en poids.

Les ingrédients de ce mode de réalisation et leurs teneurs particulières sont tels que décrits ci-avant, y inclus les caractéristiques préférées et les modes de réalisation.

En particulier, la composition selon l'invention est une composition mono-composante comprenant :
- entre 5 % et 99 % en poids d'au moins un polymère silylé, de préférence de formule (IV") ou (V'), par rapport au poids total de la composition,
- entre 0,5 % et 5 % en poids d'au moins un catalyseur boré protégé de formule (I) ou de formule (II) par rapport au poids total du au moins un polymère silylé, de préférence dans lesquelles :
   ∘ Rⁱ et Rⁱⁱ sont choisis indépendamment parmi les groupements suivants : 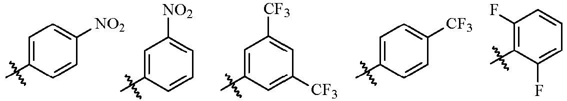 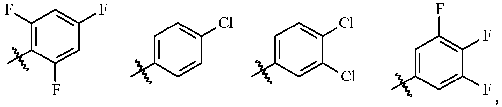
   ∘ Rⁱⁱⁱ est directement lié à l'atome d'oxygène de ORⁱⁱⁱ, et ORⁱⁱⁱ est choisi parmi les groupements suivants : 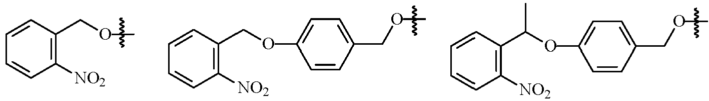 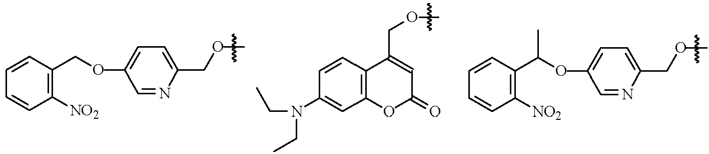 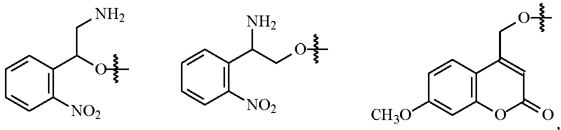 et
   ∘ R^{iv} et R^{v} sont directement liés à l'atome d'oxygène respectivement de OR^{iv} et OR^{v}, et OR^{iv} et OR^{v} sont choisis parmi les groupements suivants : 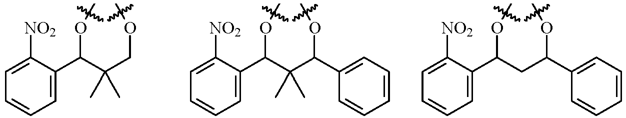 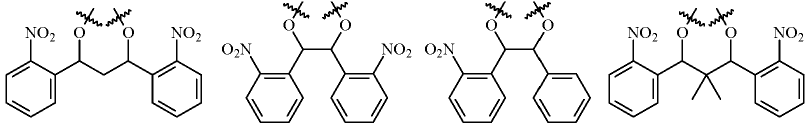 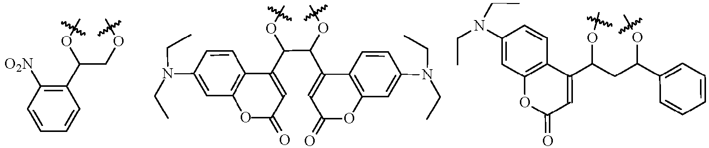 et
- optionnellement jusqu'à 80 % en poids d'un ou plusieurs additifs par rapport au poids total de la composition, le ou les additifs étant de préférence choisis parmi les charges, les promoteurs d'adhésion, les plastifiants, les solvants, les agents rhéologiques, les absorbeurs d'humidité, les pigments, les stabilisants UV (ou antioxydants), et leurs mélanges.

De préférence, la composition mono-composante est constituée essentiellement des ingrédients mentionnés ci-avant.

Les ingrédients de ce mode de réalisation et leurs teneurs particulières sont tels que décrits ci-avant, y inclus les caractéristiques préférées et les modes de réalisation.

Selon un second mode de réalisation, la composition selon l'invention est une composition bicomposante comprenant un composant A et un composant B, ladite composition comprenant :
- entre 5 % et 99 % en poids d'au moins un polymère silylé dans le composant A, de préférence de formule (IV), (V) ou (VI), par rapport au poids total de la composition,
- entre 0,05 % et 10 % en poids d'au moins un catalyseur boré protégé de formule (I) ou de formule (II) dans le composant A et/ou B, de préférence dans le composant B, par rapport au poids total du au moins un polymère silylé, dans lesquelles Rⁱ et Rⁱⁱ sont de préférence choisis indépendamment parmi un groupement phényle, naphtyle, pyridinyle, furanyle et thiényle, chaque groupement étant optionnellement substitué par un ou plusieurs substituants indépendamment choisi parmi le fluor, le chlore, un groupement nitro et un groupement trifluorométhyle,
- optionnellement jusqu'à 10 % en poids d'eau dans le composant B par rapport au poids total de la composition, et
- optionnellement jusqu'à 95 % en poids d'un ou plusieurs additifs dans le composant A et/ou B par rapport au poids total de la composition, le ou les additifs étant de préférence choisis parmi les charges, les promoteurs d'adhésion, les plastifiants, les solvants, les agents rhéologiques, les absorbeurs d'humidité, les pigments, les stabilisants UV (ou antioxydants), et leurs mélanges.

Le ratio en poids du composant A par rapport au composant B peut être compris entre 100 et 0,2, de préférence de 40 à 1.

De préférence, la composition bicomposante est constituée essentiellement des ingrédients mentionnés ci-avant. Par « constituée essentiellement », on entend que la composition bicomposante comprend moins de 5 % en poids d'ingrédients autres que les ingrédients susmentionnés, par rapport au poids total de ladite composition, de préférence moins de 2 % en poids, encore plus préférentiellement moins de 1 % en poids.

Les ingrédients de ce mode de réalisation et leurs teneurs particulières sont tels que décrits ci-avant, y inclus les caractéristiques préférées et les modes de réalisation.

En particulier, la composition selon l'invention est une composition bicomposante comprenant un composant A et un composant B, ladite composition comprenant :
- entre 5 % et 99 % en poids d'au moins un polymère silylé dans le composant A, de préférence de formule (IV") ou (V'), par rapport au poids total de la composition,
- entre 0,5 % et 5 % en poids d'au moins un catalyseur boré protégé de formule (I) ou de formule (II) dans le composant A et/ou B, de préférence dans le composant B, par rapport au poids total du au moins un polymère silylé, de préférence dans lesquelles :
   ∘ Rⁱ et Rⁱⁱ sont choisis indépendamment parmi les groupements suivants : 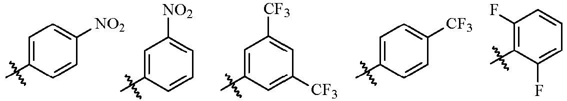 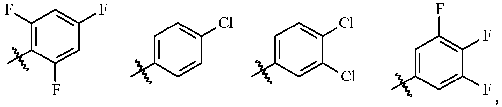
   ∘ Rⁱⁱⁱ est directement lié à l'atome d'oxygène de ORⁱⁱⁱ, et ORⁱⁱⁱ est choisi parmi les groupements suivants : 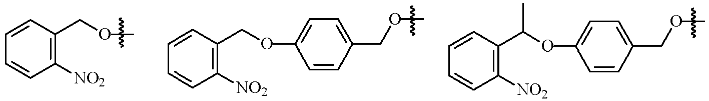 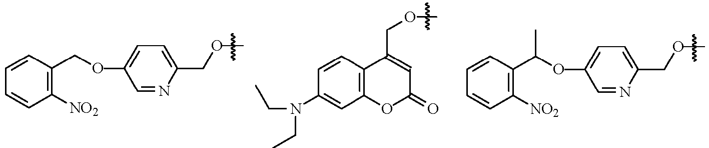 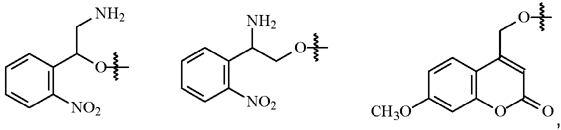 et
   ∘ R^{iv} et R^{v} sont directement liés à l'atome d'oxygène respectivement de OR^{iv} et OR^{v}, et OR^{iv} et OR^{v} sont choisis parmi les groupements suivants : 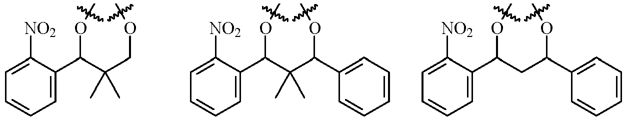 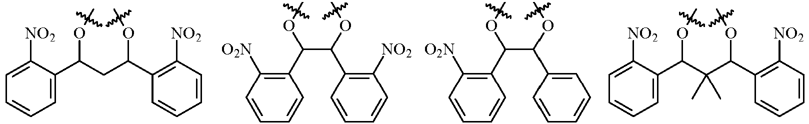 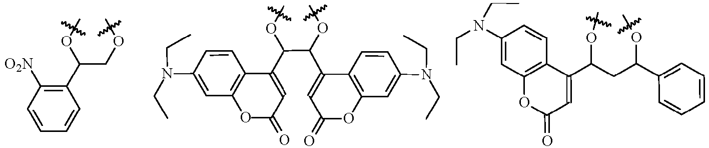
- optionnellement jusqu'à 5 % en poids d'eau dans le composant B par rapport au poids total de la composition, et
- optionnellement jusqu'à 80 % en poids d'un ou plusieurs additifs dans le composant A et/ou B par rapport au poids total de la composition, le ou les additifs étant de préférence choisis parmi les charges, les promoteurs d'adhésion, les plastifiants, les solvants, les agents rhéologiques, les absorbeurs d'humidité, les pigments, les stabilisants UV (ou antioxydants), et leurs mélanges.

De préférence, la composition bicomposante est constituée essentiellement des ingrédients mentionnés ci-avant.

Les ingrédients de ce mode de réalisation et leurs teneurs particulières sont tels que décrits ci-avant, y inclus les caractéristiques préférées et les modes de réalisation.

La composition selon l'invention peut être préparée par simple mélange de ses ingrédients. Lorsque la composition est bicomposante, chacun des composants A et B peut être préparé séparément. Les composants A et B peuvent être conditionnés par exemple dans une bicartouche.

De préférence, la composition selon l'invention est préparée à une température comprise entre 10°C et 80°C, plus préférentiellement entre 18°C et 60°C.

### Utilisation de la composition

La présente invention vise également l'utilisation de la composition selon l'invention comme adhésif et/ou mastic.

En particulier, la présente invention vise l'utilisation de la composition selon l'invention comme adhésif et/ou mastic dans le domaine de la construction des bâtiments, de l'électronique et/ou dans le domaine de la fabrication des moyens de transport, comme l'industrie automobile, ferroviaire, aérospatiale ou navale.

La composition selon l'invention est telle que décrite ci-avant, y inclus les modes de réalisation et caractéristiques préférées.

### Procédé de photoactivation

La présente invention concerne également un procédé de photoactivation de la composition selon l'invention, comprenant une étape d'irradiation de ladite composition.

Avantageusement, l'étape d'irradiation est effectuée à une longueur d'onde de la bande d'absorption du catalyseur boré protégé présent dans la composition, par exemple à une longueur d'onde comprise entre 200 et 500 nm, de préférence entre 350 nm et 410 nm.

L'étape d'irradiation peut être mise en oeuvre entre 5 min et 72 h, de préférence entre 10 min et 36 h, plus préférentiellement entre 15 min et 12 h.

L'étape d'irradiation peut être mise en oeuvre à une température comprise entre 15°C et 80°C, de préférence entre 18°C et 65°C, plus préférentiellement entre 20°C et 30°C.

Le procédé de photoactivation selon l'invention permet notamment de déprotéger le catalyseur boré protégé introduit dans la composition selon l'invention, et donc de libérer l'acide borinique/boronique correspondant afin de catalyser la réticulation du polymère silylé de la composition selon l'invention.

En particulier, le procédé de photoactivation conduit à la libération d'au moins un catalyseur boré de formule (I') B(Rⁱ)(Rⁱⁱ)(OH) ou de formule (II') B(Rⁱ)(OH)₂, dans lesquelles Rⁱ et Rⁱⁱ sont tels que décrits ci-avant (y inclus les modes de réalisation et caractéristiques préférées).

### Procédé d'assemblage de substrats

La présente invention vise aussi un procédé d'assemblage de substrats comprenant :
- l'enduction, sur au moins une surface des substrats à assembler, de la composition selon l'invention, puis
- la mise en contact des substrats, et
- la réticulation de la composition,
le procédé d'assemblage de substrats comprenant en outre le procédé de photoactivation selon l'invention mis en oeuvre avant l'étape de mise en contact des substrats.

Le procédé de photoactivation et la composition selon l'invention sont tels que décrits ci-avant, y inclus les modes de réalisation et caractéristiques préférées.

De préférence, les étapes d'enduction et de mise en contact sont mises en oeuvre à température ambiante (en particulier entre 18°C et 25°C, par exemple à environ 23°C).

Par « environ X », on vise plus ou moins 10% la valeur de X.

Il est entendu que, lors de l'étape d'enduction et de l'étape de mise en contact, la composition selon l'invention est à l'état non durci.

L'étape de réticulation peut être mise en oeuvre entre 18°C et 80°C, de préférence entre 20°C et 65°C, par exemple entre 30°C et 60°C.

Les substrats peuvent être identiques ou différents.

Les substrats concernés sont très variés et sont, par exemple, des substrats inorganiques tels que le béton, les céramiques, les métaux et/ou les alliages (comme les alliages d'aluminium, l'acier, les métaux non-ferreux et les métaux galvanisés), et/ou des substrats organiques comme le bois et/ou des plastiques (comme le PVC, le polycarbonate, le PMMA, le polyéthylène, le polypropylène, les polyesters, les résines époxy).

De préférence, le procédé de photoactivation selon l'invention est mis en oeuvre après l'étape d'enduction, c'est-à-dire après l'étape d'enduction et avant l'étape de mise en contact des substrats.

### Article

La présente invention vise aussi un article comprenant la composition selon l'invention (réticulée ou non), ladite composition liant au moins deux substrats dudit article.

La composition selon l'invention est telle que décrite ci-avant, y inclus les modes de réalisation et caractéristiques préférées.

L'article peut être obtenu grâce au procédé d'assemblage de substrats selon l'invention (incluant les modes de réalisation et caractéristiques préférées).

Les substrats sont de préférence tels que décrits ci-avant pour le procédé d'assemblage de substrats selon l'invention.

Tous les modes de réalisation décrits ci-dessus peuvent être combinés les uns avec les autres. En particulier, les différents constituants susmentionnés de la composition, et notamment les modes préférés, peuvent être combinés les uns avec les autres.

Les exemples ci-après sont donnés à titre purement illustratif de l'invention et ne sauraient être interprétés comme en limitant la portée.

### Exemples

### Exemple 1: Synthèse de catalyseurs borés protégés par un groupement photolabile

Des catalyseurs borés protégés B1-B5 ont été obtenus par le procédé suivant : un acide boronique (1,1 mmol) et du Na₂SO₄ (3,0 mmol) ont été ajoutés à une solution de (RS)-2,2-diméthyl-1-(2-nitrophényl)propane-1,3-diol (1,0 mmol) dans du tétrahydrofurane. Le mélange réactionnel a été agité 24 h à 60°C, puis refroidi à température ambiante et filtré, et le gâteau de filtration a été extrait trois fois avec de l'acétate d'éthyle. Le filtrat a ensuite été concentré sous pression réduite et le produit brut a été purifié par chromatographie sur colonne ou par recristallisation.

Les acides boroniques mis en oeuvre pour l'obtention des catalyseurs borés protégés B1-B5 sont respectivement l'acide 4-nitrophénylboronique, l'acide 3,5-bis(trifluorométhyl)phénylboronique, l'acide 4- (trifluorométhyl)phénylboronique, l'acide 2,6-difluorophénylboronique et l'acide 3-nitrophénylboronique.

Les formules des catalyseurs borés protégés B1-B5 sont indiquées dans le Tableau 1.

**Tableau 1**

| **Catalyseur** | **B1** | **B2** | **B3** | **B4** | **B5** |
|---|---|---|---|---|---|
| Formule | 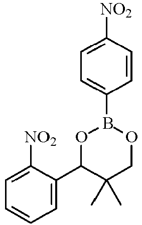 | 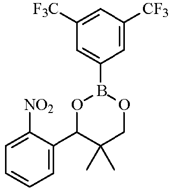 | 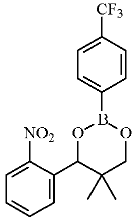 | 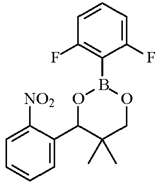 | 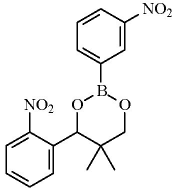 |

### Exemple 2: Temps d'écoulement de compositions de polymère silylé et de catalyseur boré protégé en l'absence d'irradiation

Différentes compositions C1-C5 selon l'invention ont été préparées de la façon suivante : un catalyseur boré protégé (1 % en poids de catalyseur par rapport au poids total du catalyseur et du polymère silylé), préalablement dissous dans quelques gouttes d'éther diéthylique, a été ajouté à 1 g de polyéther à groupements terminaux méthyldiméthoxysilane (MS POLYMER^{™} S203H, Kaneka) dans un vial de 13 mm de diamètre, puis le vial a été placé dans un mélangeur VORTEX afin d'agiter vigoureusement le mélange et obtenir les compositions C1-C5.

Après avoir été chauffées à environ 50°C pendant 7 jours, le temps d'écoulement de chaque composition a été mesuré à 25°C et correspond au temps que met la composition à parcourir 3,5 cm lorsque le vial est retourné à 180° à la verticale.

Une composition comparative C0 sans catalyseur boré protégé a également été évaluée dans les mêmes conditions que les compositions C1-C5 selon l'invention (après 7j à 50°C). Cette composition est constituée de 1 g de MS POLYMER^{™} S203H.

Les différentes compositions testées et leur temps d'écoulement sont indiqués dans le Tableau 2 ci-dessous.

**Tableau 2**

| **Composition** | **C0 (comp)** | **C1 (inv)** | **C2 (inv)** | **C3 (inv)** | **C4 (inv)** | **C5 (inv)** |
|---|---|---|---|---|---|---|
| Catalyseur | - | B1 | B2 | B3 | B4 | B5 |
| Temps d'écoulement | <5s | 8s | 9s | 10s | 12s | 18s |

Les temps d'écoulement obtenus pour les compositions C1-C5 selon l'invention sont similaires à celui de la composition comparative C0 (polymère silylé seul). Les catalyseurs borés protégés ne permettent donc pas de réticuler le polymère silylé en l'absence d'irradiation.

Ainsi, les compositions selon l'invention ont une bonne stabilité au stockage et un temps ouvert aussi long que nécessaire (le polymère silylé ne risque pas de réticuler prématurément).

### Exemple 3: Temps d'écoulement de compositions de polymère silylé et de catalyseur boré après irradiation

Les compositions C1-C5 préparées selon le procédé décrit à l'Exemple 2 ont été irradiées à une température d'environ 23°C pendant 20 minutes avec une LED Kessil^{®} (PR160L) centrée à 370 nm, placée à une distance de 5 cm. Après cette période d'irradiation, les compositions ont été chauffées à environ 50°C pendant 7 jours. Le temps d'écoulement de chaque composition a ensuite été mesuré conformément à l'Exemple 2 et est indiqué dans le Tableau 3.

**Tableau 3**

| **Composition** | **C1 (inv)** | **C2 (inv)** | **C3 (inv)** | **C4 (inv)** | **C5 (inv)** |
|---|---|---|---|---|---|
| Temps d'écoulement | 4 min | 17 min | 2 min 30 s | 8 min 20 s | 4 min 30 s |

L'irradiation des compositions C1-C5 permet une réticulation du polymère silylé. En effet, les temps d'écoulement du Tableau 3 (après irradiation) sont significativement supérieurs aux temps d'écoulement du Tableau 2 (sans irradiation).

De ce fait, il est possible de garder les compositions C1-C5 selon l'invention à l'air libre le temps nécessaire (par exemple, pour l'appliquer sur de grandes zones), puis de déclencher la réticulation du polymère silylé au moment voulu par simple irradiation.

## Revendications

1. Composition comprenant :
- au moins un polymère silylé, et
- au moins un catalyseur boré protégé de formule (I) B(Rⁱ)(Rⁱⁱ)(ORⁱⁱⁱ) ou de formule (II) B(Rⁱ)(OR^{iv})(OR^{v}),
dans lesquelles :
∘ Rⁱ et Rⁱⁱ, identiques ou différents, représentent indépendamment un groupement aryle substitué ou non, Rⁱ et Rⁱⁱ pouvant être liés entre eux de façon covalente,
∘ Rⁱⁱⁱ, directement ou indirectement lié à l'atome d'oxygène de ORⁱⁱⁱ, représente :
▪ un groupement comprenant une structure de type (la) : 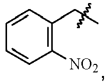 ou
▪ un groupement comprenant une structure de type (Ib) : 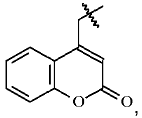
∘ OR^{iv} et OR^{v} sont engagés dans un même cycle et R^{iv} et R^{v}, directement ou indirectement liés à l'atome d'oxygène respectivement de OR^{iv} et OR^{v}, représentent :
▪ un groupement comprenant une structure de type (Ila) : 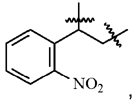 ou
▪ un groupement comprenant une structure de type (IIb) :

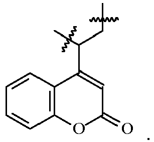

2. Composition selon la revendication 1, dans laquelle le polymère silylé comprend au moins un, de préférence au moins deux, groupements alkoxysilane de formule (III) :
-Si(R⁴)ₚ(OR⁵)₃₋ₚ
dans laquelle :
- R⁴ représente un radical alkyl linéaire ou ramifié comprenant de 1 à 4 atomes de carbone, de préférence 1 à 2 atomes de carbone, et lorsque p est égal à 2, les radicaux R⁴ sont identiques ou différents,
- R⁵ représente un radical alkyl linéaire ou ramifié comprenant de 1 à 4 atomes de carbone, de préférence 1 à 2 atomes de carbone, et éventuellement un ou plusieurs hétéroatomes choisis indépendamment parmi l'oxygène et l'azote, et lorsque p est égal à 0 ou 1, les radicaux R⁵ sont identiques ou différents, deux groupements OR⁵ pouvant être engagés dans un même cycle, et
- p est un nombre entier égal à 0, 1 ou 2, de préférence égal à 0 ou 1.

3. Composition selon la revendication 2, dans laquelle le polymère silylé est de formule (IV), (V) ou (VI) : 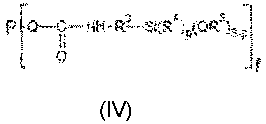 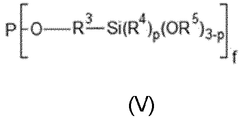 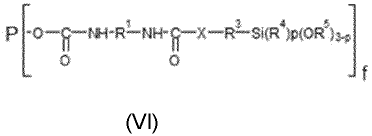 dans lesquelles :
- R⁴, R⁵ et p ont la même signification que dans la formule (III) décrite ci-dessus,
- P représente un radical polymérique saturé ou insaturé, à chaîne ouverte linéaire ou ramifiée, ou comprenant un ou plusieurs cycles éventuellement aromatiques, comprenant éventuellement un ou plusieurs hétéroatomes, tels que oxygène, azote, soufre et/ou silicium, de préférence oxygène et/ou azote,
- R¹ représente un radical divalent hydrocarboné comprenant de 5 à 15 atomes de carbone, saturé ou insaturé, à chaîne ouverte linéaire ou ramifiée, ou comprenant un ou plusieurs cycles éventuellement aromatiques,
- R³ représente un radical divalent alkylène linéaire ou ramifié comprenant de 1 à 6 atomes de carbone, de préférence de 1 à 3 atomes de carbone,
- X représente un radical divalent choisi parmi -NH-, -NR⁷- ou -S-,
- R⁷ représente un radical alkyl linéaire ou ramifié comprenant de 1 à 20 atomes de carbone et pouvant également comprendre un ou plusieurs hétéroatomes, et
- f est un entier allant de 1 à 6, avantageusement de 2 à 5, préférentiellement de 2 à 4, encore plus préférentiellement de 2 à 3.

4. Composition selon la revendication 3, dans laquelle le polymère silylé est de formule (IV), (V) ou (VI) avec P représentant un radical polymérique choisi parmi les polyéthers, polycarbonates, polyesters, polyoléfines, polyacrylates, polyamides, polyéther polyuréthanes, polyester polyuréthanes, polyoléfine polyuréthanes, polyacrylate polyuréthanes, polycarbonate polyuréthanes, polyéther/polyester polyuréthanes à blocs et les polysiloxanes, de préférence choisi parmi les polyéthers, les polyuréthanes, les polyéther polyuréthanes, et leurs mélanges, plus préférentiellement parmi les polyéthers.

5. Composition selon l'une quelconque des revendications 1 à 4, dans laquelle Rⁱ et Rⁱⁱ sont choisis indépendamment parmi un groupement phényle, naphtyle, anthracényle, coumarinyle, pyridinyle, pyrazinyle, pyridazinyle, pyrimidinyle, indolyle, acrydinyle, quinolinyle, furanyle, pyrrolyle et thiényle, chaque groupement étant substitué ou non, de préférence parmi un groupement phényle, naphtyle, pyridinyle, furanyle et thiényle, plus préférentiellement un groupement phényle.

6. Composition selon la revendication 5, dans laquelle Rⁱ et Rⁱⁱ sont choisis indépendamment parmi les groupements suivants :

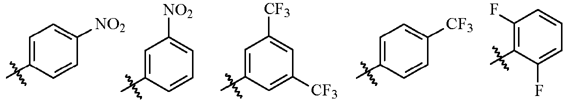

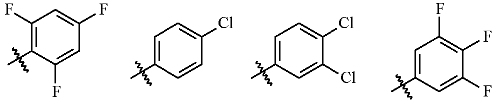

7. Composition selon l'une quelconque des revendications 1 à 6, dans laquelle Rⁱⁱⁱ est directement lié à l'atome d'oxygène de ORⁱⁱⁱ, et ORⁱⁱⁱ est choisi parmi les groupements suivants :

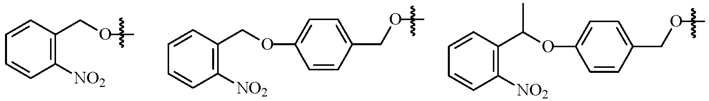

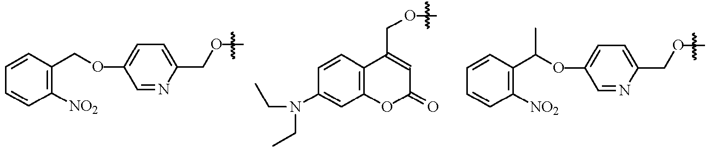

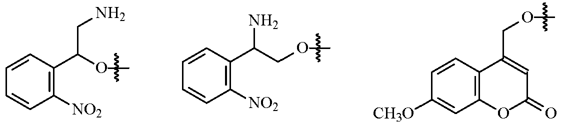

8. Composition selon l'une quelconque des revendications 1 à 7, dans laquelle R^{iv} et R^{v} sont directement liés à l'atome d'oxygène respectivement de OR^{iv} et OR^{v}, et OR^{iv} et OR^{v} sont choisis parmi les groupements suivants :

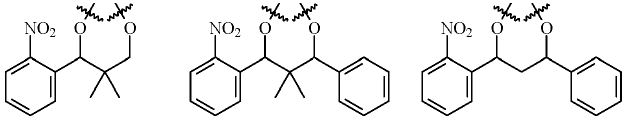

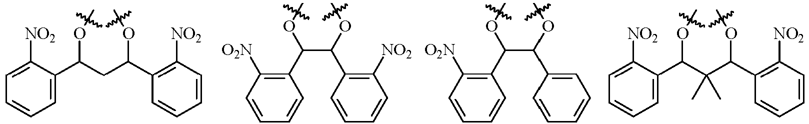

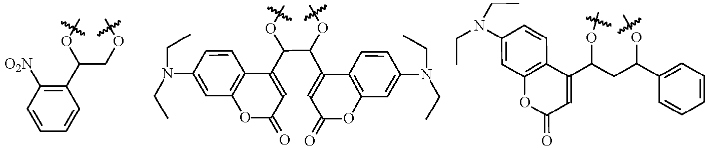

9. Composition selon la revendication 8, dans laquelle R^{iv} et R^{v} sont directement liés à l'atome d'oxygène respectivement de OR^{iv} et OR^{v}, et OR^{iv} et OR^{v} sont choisis parmi les groupements suivants :

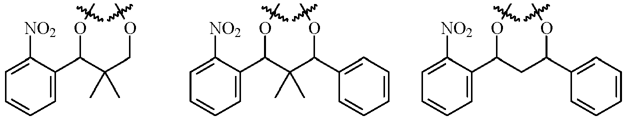

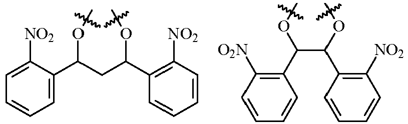

10. Composition selon l'une quelconque des revendications 1 à 9, dans laquelle la teneur en catalyseur boré protégé est comprise entre 0,05 % et 10 % en poids par rapport au poids total du au moins un polymère silylé.

11. Composition selon l'une quelconque des revendications 1 à 10, dans laquelle la teneur en catalyseur de réticulation autre qu'un catalyseur boré protégé est inférieure à 0,05 % en poids par rapport au poids total de la composition, de préférence inférieure à 0,02 % en poids, plus préférentiellement inférieure à 0,015 % en poids.

12. Utilisation de la composition selon l'une quelconque des revendications 1 à 11, comme adhésif et/ou mastic.

13. Procédé de photoactivation de la composition selon l'une quelconque des revendications 1 à 11, comprenant une étape d'irradiation de ladite composition.

14. Procédé d'assemblage de substrats comprenant :
- l'enduction, sur au moins une surface des substrats à assembler, de la composition selon l'une quelconque des revendications 1 à 11, puis
- la mise en contact des substrats, et
- la réticulation de la composition,
le procédé d'assemblage de substrats comprenant en outre le procédé de photoactivation selon la revendication 13 mis en oeuvre avant l'étape de mise en contact des substrats.

15. Article comprenant la composition selon l'une quelconque des revendications 1 à 11, ladite composition liant au moins deux substrats dudit article.
